# EUROPÄISCHE PATENTANMELDUNG

(11) **EP 3 789 446 A1**
(43) Veröffentlichungstag der Anmeldung: **10.03.2021**
(21) Anmeldenummer: 19195330.6
(22) Anmeldetag: 04.09.2019
(51) Int. Cl.: C08K 3/011, C08K 3/105, C08K 3/26, C08K 5/00, C08K 5/39, C08K 5/40, C08K 5/405, C08K 5/47, C08K 3/30

(54) **VERNETZUNGSMITTEL FÜR DIE NIEDRIGTEMPERATURAUSHÄRTUNG**

(71) Anmelder: Henkel AG & Co. KGaA, 40589 Düsseldorf (DE)
(72) Erfinder: Sauer, Ralf, 68789 St. Leon-Rot (DE); Klotz, Michael, 68353 Edingen-Neckarhausen (DE); Zahn, Thomas, 69245 Bammental (DE); Born, Peter, 69207 Sandhausen (DE)

(57) **Zusammenfassung**

Die vorliegenden Erfindung betrifft ein Vernetzungsmittel für die Vernetzung polymerer Verbindungen, insbesondere bei niedrigen Temperaturen, das eine Metallverbindung und eine Amin-Verbindung umfasst, wobei die Amin-Verbindung von der Metallverbindung umschlossen ist, sowie die Verwendung des beschriebenen Vernetzungsmittels für die Vulkanisierung.

## Beschreibung

Die vorliegenden Erfindung betrifft ein Vernetzungsmittel für die Vernetzung polymerer Verbindungen, insbesondere bei niedrigen Temperaturen, das eine Metallverbindung und eine Amin-Verbindung umfasst, wobei die Amin-Verbindung von der Metallverbindung umschlossen ist, sowie die Verwendung des beschriebenen Vernetzungsmittels für die Vulkanisierung.

Kunststoffe sind aus der heutigen Welt nicht mehr wegzudenken, so dass immer wieder Anstrengungen seitens der Industrie unternommen werden, deren Herstellungsprozesse zu verbessern und diese im Hinblick auf die Diskussion der Nachhaltigkeit industrieller Prozesse zu optimieren. Hierbei stehen insbesondere elastomere Kunststoffe im Fokus der Bemühungen, die auf dem Gebiet der Automobilindustrie vor allem bei der Herstellung von Reifen Verwendung finden.

Für die Gewinnung elastomerer Kunststoffe werden in der Regel Ausgangsverbindungen auf Basis von Kautschuk, wie Naturkautschuk oder Synthesekautschuk, verwendet, die mittels Vernetzung der einzelnen Polymerketten in die entsprechenden Kunststoffe überführt werden. Im Rahmen der klassischen Vulkanisierung wird eine Kautschukmischung aus Rohkautschuk und Schwefel oder schwefelspendenden Stoffen in Gegenwart von Vulkanisationsbeschleunigern erhitzt, wobei die Vulkaniserungstemperatur in der Regel im Bereich von 120 bis 160 °C liegt. Bei der Reaktion werden Schwefelbrücken ausgebildet, die die langkettigen Kautschukmoleküle vernetzen, wodurch die plastischen Eigenschaften des Kautschuks verloren gehen und der Kautschuk in einen elastischen Zustand überführt wird. Die Elastizität des gewonnenen Gummiwerkstoffs ist abhängig vom Grad der Vernetzung und kann durch die Zugabe einer entsprechenden Menge Schwefel und die Reaktionsdauer gesteuert werden.

Um die Reaktion in einem für industrielle Zwecke vertretbaren Zeitrahmen durchzuführen, ist der Einsatz von sogenannten Vulkanisationsbeschleunigern unverzichtbar. Hierbei handelt es sich meist um Organoschwefelverbindungen, deren Verwendung jedoch den Nachteil aufweist, dass während der Reaktion gesundheitsschädliche Nebenprodukte entstehen, die zum Teil flüchtig sind und eine Belastung für die Umwelt und eine Gefährdung für die Arbeiter darstellen. Um dies zu vermeiden, wurden alternative Beschleunigungssysteme eingesetzt, beispielsweise die Vernetzung mittels Peroxiden, Metalloxiden oder energiereicher Strahlung. Hierbei hat sich allerdings gezeigt, dass die physikalischen Eigenschaften der auf diese Weise hergestellten Produkten, wie Härte und Elastizität, nicht an die mittels klassischer Vulkanisierung hergestellter Produkte heranreichen.

DE 100 62 861 beschreibt heißhärtende, reaktive Zusammensetzung auf der Basis von natürlichen und/oder synthetischen, olefinischen Doppelbindungen enthaltenden Elastomeren auf Basis flüssiger Polyenen bestehend aus Schwefel und einem oder mehrerer organischer Beschleuniger und/oder Metalloxiden, die eine oder mehrere heterocyclische Verbindungen enthalten, die mindestens zwei Stickstoffatome im Ring haben, die sich unter Vermeidung beziehungsweise starker Reduktion der Geruchsbelästigung vulkanisieren lassen. Die heißhärtende Zusammensetzung enthält Festkautschuke mit einem Molekulargewicht von 100000 oder höher, flüssige Polyene mit einem Molekulargewicht von unter 20000, ein Vulkanisationssystem bestehend aus Schwefel und einem oder mehrerer organsicher Beschleuniger oder Metalloxiden, sowie eine oder mehrerer heterozyklische Verbindungen mit mindestens zwei Stickstoffatome im Ring.

EP 2 861 686 offenbart eine heiß-härtende Zubereitung, die eine Triglyceridfraktion, deren Fettsäureverteilung einen Anteil von mindestens 50 Gew.-% einer oder mehrerer Ω-3-Fettsäuren und/oder einer oder mehrerer Ω-6-Fettsäuren aufweist, mindestens ein Vulkanisationsmittel ausgewählt aus der Gruppe bestehend aus Schwefel, peroxidischen Vulkanisationsmitteln, Chinonen und/oder Chinondioximen und Dinitrosobenzolen, mindestens einen anorgansichen Füllstoff und mindestens eine synthetisches Polymer, das mindestens eine C-C-Doppelbindung und/oder eine C-C-Dreifachbindung aufweist, enthält.

Die im Stand der Technik vorgeschlagenen Alternativen weisen den Nachteil auf, dass teilweise sehr hohe Temperaturen nötig sind, um einen zufriedenstellenden Grad an Vernetzung zu erreichen.

Angesichts der Nachteile der im Stand der Technik beschriebenen Systeme ist es Aufgabe der vorliegenden Erfindung Alternativen für die Herstellung von elastomeren Kunststoffen zur Verfügung zu stellen, bei denen eine Freisetzung schädlicher Nebenprodukte deutlich reduziert wird und die darüber hinaus vorzugsweise bei niedrigen Temperaturen eingesetzt werden können.

Es wurde überraschend gefunden, dass diese Aufgabe durch die Bereitstellung eines Vernetzungsmittels gelöst wird, das eine Amin-Verbindung und eine Metallverbindung in einer speziellen Anordnung zueinander enthält.

Ein erster Gegenstand der vorliegenden Anmeldung ist daher ein Vernetzungsmittel, das eine Metallverbindung und eine Amin-Verbindung umfasst, wobei die Amin-Verbindung in der Metallverbindung eingekapselt ist.

Eingekapselt im Sinne der vorliegenden Erfindung bezeichnet einen Zustand, bei dem die Amin-Verbindung von der Metallverbindung umschlossen ist, ohne dass es zwingend zu einer Ausbildung von chemischen Bindungen zwischen der Metallverbindung und der Amin-Verbindung kommt.

Es wurde im Rahmen der vorliegenden Erfindung überraschend gefunden, dass die Freisetzung schädlicher Nebenprodukte durch den Einsatz des erfindungsgemäßen Vernetzungsmittels deutlich reduziert werden konnte, ohne dass eine Beeinträchtigung der physikalischen und mechanischen Eigenschaften der erhaltenen Produkte beobachtet wurde. Auch der eigentlich erwartete Rückgang der Aktivität des Vernetzungsmittels trat überraschenderweise nicht ein.

Ohne an eine bestimmte Theorie gebunden zu sein, wird vermutet, dass die spezielle Anordnung der Amin-Verbindung und der Metallverbindung ein Freisetzen flüchtiger Nebenprodukte verhindert, ohne jedoch die Aktivität zu beeinflussen. In einer bevorzugten Ausführungsform liegt die Metallverbindung daher in Form eines Clusters vor, in den die Amin-Verbindung eingebettet ist. Die Anzahl der in einen der Metallcluster eingebetteten Amin-Verbindungen kann dabei variieren. So können auch mehr als eine Amin-Verbindung in einen Metallcluster eingebettet sein. In einer bevorzugten Ausführungsform beträgt das Verhältnis der der Amin-Verbindung zu der Metallverbindung in dem erfindungsgemäßen Vernetzungsmittel 1:1.

Unter einem Metallcluster im Rahmen der vorliegenden Erfindung sind Verbindungen mit mindestens drei Metallatomen zu verstehen, in denen jedes Metallatom unter Ausbildung eines Hohlraums an mindestens zwei weitere gebunden ist. Im Rahmen der vorliegenden Erfindung können sowohl ligandenstabilisierte Cluster als auch nicht-ligandenstabilisierte Systeme verwendet werden. In einer bevorzugten Ausführungsform der vorliegenden Erfindung weist die Metallverbindung in Form eines Clusters mindestens 3 Metallatome auf. Besonders bevorzugt weist die Metallverbindung in Form eines Clusters 3 bis 55, vorzugsweise 3 bis 38, insbesondere 3 bis 12 Metallatome auf. Ganz besonders bevorzugt ist eine Ausführungsform, in der der Metallcluster sechs Metallatome aufweist.

An die Metalle an sich sind im Rahmen der vorliegenden Erfindung keine besonderen Anforderungen zu stellen, solange sie zur Ausbildung von Clustern befähigt sind. Allerdings hat sich als vorteilhaft erwiesen, wenn die in der Metallverbindung enthaltenen Metallatome ebenfalls einen positiven Einfluss auf die Vernetzungsreaktion haben. In einer bevorzugten Ausführungsform handelt es sich daher bei der im erfindungsgemäßen Vernetzungsmittel eingesetzten Metallverbindung um eine Zink-Verbindung, vorzugsweise um einen Zink-Cluster.

Im Bereich der Herstellung von elastomeren Kunststoffen haben sich insbesondere Amin-Verbindungen als Beschleuniger bewährt, die Schwefelatome aufweisen. Daher ist eine Ausführungsform der vorliegenden Erfindung bevorzugt, in der die Amin-Verbindung ausgewählt ist aus der Gruppe der Amin-Schwefelverbindungen, insbesondere solchen, die mindestens zwei Thio-Gruppen aufweisen. In einer besonders bevorzugten Ausführungsform ist die Amin-Verbindung ausgewählt aus der Gruppe bestehend aus Dithoicarbamaten, Thiuramen, Mercaptobenzothiazol, Dibenzothiazyldisulfid und Thioharnstoffen. Ganz besonders bevorzugt ist die Amin-Verbindung ausgewählt aus der Gruppe der Dithoicarbamate oder Thiurame.

Dank des erfindungsgemäßen Vernetzungsmittels können der Vernetzungsgrad, der Start der Vernetzung sowie die Schnelligkeit der Vernetzung kontrolliert werden. Als besonders vorteilhaft hat es sich diesbezüglich erwiesen, wenn der Gesamtgehalt an Metallverbindung und Amin-Verbindung in dem Vernetzungsmittel nicht zu hoch gewählt wird. Daher ist eine Ausführungsform bevorzugt, in der der Gesamtgehalt der Amin-Verbindung und der Metallverbindung in dem Vernetzungsmittel 0,01 bis 2 Gew.-%, vorzugsweise 0,1 bis 1,5 Gew.-% beträgt, jeweils bezogen auf das Gesamtgewicht des Vernetzungsmittels.

Das erfindungsgemäße Vernetzungsmittel kann weiterhin zusätzliche Bestandteile enthalten wie Schwefel, Pigmente oder Füllstoffe. Hierbei ist insbesondere eine Ausführungsform bevorzugt, in der das Vernetzungsmittel weiterhin ein anorganisches Salz enthält. In einer besonders bevorzugten Ausführungsform handelt es sich bei dem anorganischen Salz um Calciumcarbonat.

Das erfindungsgemäße Vernetzungsmittel kann in einer Vielzahl von Reaktionen eingesetzt werden, ist aber besonders für die Verwendung bei niedrigen Temperaturen bestimmt. Daher ist eine Ausführungsform besonders bevorzugt, in der das erfindungsgemäße Vernetzungsmittel bei Raumtemperatur flüssig ist.

Im Rahmen der vorliegenden Erfindung wurde überraschend gefunden, dass unangenehme Gerüche, die normalerweise mit vulkanisierten Produkten assoziiert werden, durch die Verwendung des erfindungsgemäßen Vernetzungsmittels deutlich reduziert werden. Daher ist ein weiterer Gegenstand der vorliegenden Erfindung die Verwendung des erfindungsgemäßen Vernetzungsmittels in der Vulkanisierung. Vorzugsweise wird das erfindungsgemäße Vernetzungsmittel bei Temperaturen von weniger als 160 °C verwendet, vorzugsweise bei Temperaturen von 80 bis 150 °C. Aufgrund des positiven Geruchsprofils eignet sich das erfindungsgemäße Vernetzungsmittel besonders für die Herstellung von Produkten, die in Innenräumen verwendet werden. Daher ist eine Ausführungsform bevorzugt, in der das Vernetzungsmittel für die Herstellung von mittels Vulkanisierung hergestellten Produkten verwendet wird, die in Innenräumen verwendet werden. Bei diesen Produkten kann es sich beispielsweise um Ausstattungen für das Innere eines Fahrzeugs oder schalldämpfende Produkte handeln.

Die vorliegende Erfindung wird anhand des folgenden Beispiels näher beschrieben, wobei dies keinesfalls als Einschränkung des Erfindungsgedanken zu verstehen ist.

Die folgenden Formulierungen wurden jeweils vulkanisiert und das Vulkanisierungsverhalten und die erhaltenen Produkte untersucht. Die Formulierungen sind Tabelle 1 zusammengefasst.

**Tabelle 1:**

| | Formulierung 1 | Formulierung 2 | Formulierung 3 |
|---|---|---|---|
| CaCO₃ | 30 | 30 | 30 |
| Schwefel | 10 | 10 | 10 |
| Polybutadien | 10 | 10 | 10 |
| Leinsamenöl | 25 | 25 | 25 |
| Graphite | 20 | 20 | 20 |
| Additive | 5 | 5 | 5 |
| Vernetzungsmittel | - | 1,4 | 1,4 |

Formulierung 1 enthält kein Vernetzungsmittel, während in Formulierung 2 ein herkömmlicher Beschleuniger auf Basis von Dithiocarbamat verwendet wurde. Beide Formulierungen werden als Vergleichsbeispiele herangezogen. Die erfindungsgemäße Formulierung 3 wies das erfindungsgemäße Vernetzungsmittel auf.

In den erhaltenen Produkten wurde jeweils der Gehalt an Schwefelkohlenstoff bestimmt, der als Quelle für den mit vulkanisierten Produkten assoziiertem unangenehmen Geruch verantwortlich gemacht wird. Die Ergebnisse sind in Tabelle 2 zusammengefasst.

**Tabelle 2:**

| | |
|---|---|
| Formulierung 1 | < 1 µg/g |
| Formulierung 2 | 5 µg/g |
| Formulierung 3 | < 1 µg/g |

Wie aus Tabelle 2 ersichtlich konnte bei Verwendung des erfindungsgemäßen Vernetzungsmittels kein Schwefelkohlenstoff nachgewiesen werden und erreichten damit vergleichbare Werte wie Formulierungen, die frei von Vernetzungsmittels sind (Formulierung 1). Im Gegensatz dazu zeigten aus Formulierung 2 gewonnene Produkte einen deutlich höheren Gehalt an Schwefelkohlenstoff. Die aus den Formulierungen 1 und 2 hergestellten Produkte wiesen darüber hinaus einen unangenehmen Geruch auf, der bei Verwendung des erfindungsgemäßen Vernetzungsmittels nicht festgestellt wurde.

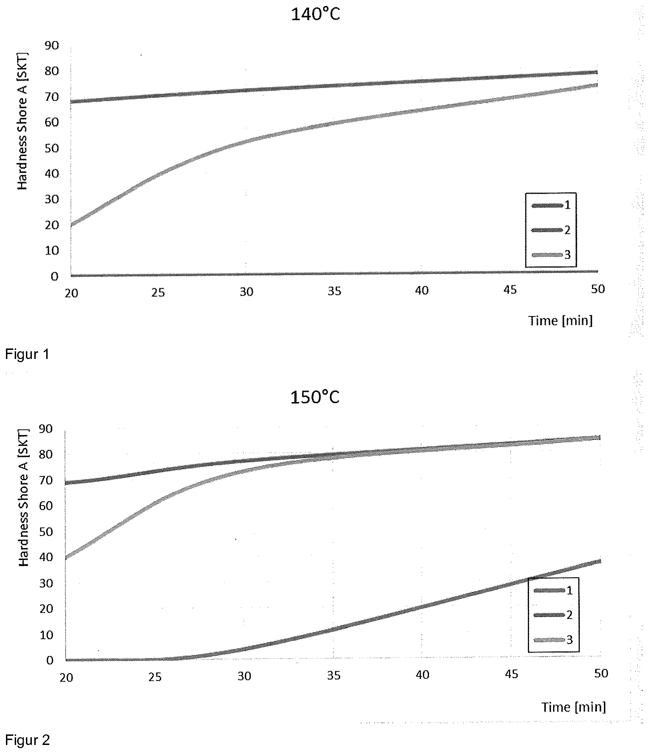

Figuren 1 und 2 zeigen das Verhalten der Formulierungen 1 bis 3 bei verschiedenen Temperaturen. Wie aus den Figuren ersichtlich, setzt die Vernetzung bei Verwendung des erfindungsgemäßen Vernetzungsmittels bereits deutlich früher ein als bei herkömmlichen Beschleunigern (Formulierung 2). Bei Formulierung 1 ohne Beschleuniger konnte kein Aushärten festgestellt werden (Figur 1) beziehungsweise setzte die Vernetzung erst deutlich später ein und verlief gegenüber den Formulierungen 2 und 3 verlangsamt.

## Patentansprüche

1. Vernetzungsmittel umfassend eine Metallverbindung und eine Amin-Verbindung, **dadurch gekennzeichnet, dass** die Amin-Verbindung in der Metallverbindung eingekapselt ist.

2. Vernetzungsmittel nach Anspruch 1, **dadurch gekennzeichnet, dass** die Metallverbindung in Form eines Clusters vorliegt, in den die Amin-Verbindung eingebettet ist.

3. Vernetzungsmittel nach wenigstens einem der Ansprüche 1 oder 2, **dadurch gekennzeichnet, dass** es sich bei der Metallverbindung um eine Zink-Verbindung handelt, vorzugsweise um einen Zink-Cluster.

4. Vernetzungsmittel nach wenigstens einem der vorangehenden Ansprüche, **dadurch gekennzeichnet, dass** die Amin-Verbindung ausgewählt ist aus der Gruppe der Amin-Schwefel-Verbindungen, vorzugsweise aus solchen, die mindestens zwei Thio-Einheiten aufweisen.

5. Vernetzungsmittel nach wenigstens einem der vorangehenden Ansprüche, **dadurch gekennzeichnet, dass** die Amin-Verbindung ausgewählt ist aus der Gruppe bestehend aus Dithoicarbamat, Thiuram, Mercaptobenzothiazol, Dibenzothiazyldisulfid und Thioharnstoffen.

6. Vernetzungsmittel nach wenigstens einem der vorangehenden Ansprüche, **dadurch gekennzeichnet, dass** der Gesamtgehalt an Metallverbindung und Amin-Verbindung in dem Vernetzungsmittel 0.01 bis 2 Gew.-%, vorzugsweise 0,1 bis 1,0 Gew.-% beträgt, jeweils bezogen auf das Gesamtgewicht des Vernetzungsmittels.

7. Vernetzungsmittel nach wenigstens einem der vorangehenden Ansprüche, **dadurch gekennzeichnet, dass** das Vernetzungsmittel weiterhin ein anorganisches Salz umfasst.

8. Vernetzungsmittel nach Anspruch 7, **dadurch gekennzeichnet, dass** es sich bei dem anorganischen Salz um Calciumcarbonat handelt.

9. Vernetzungsmittel nach wenigstens einem der vorangehenden Ansprüche, **dadurch gekennzeichnet, dass** das Vernetzungsmittel bei Raumtemperatur flüssig ist.

10. Verwendung eines Vernetzungsmittels nach wenigstens einem der Ansprüche 1 bis 9 in der Vulkanisierung.
